Europäisches Patentamt

European Patent Office

Office européen des brevets

(11) Publication number: **0 116 523
B1**

(12) **EUROPEAN PATENT SPECIFICATION**

(45) Date of publication of patent specification: **27.12.90**

(21) Application number: **84830024.0**

(22) Date of filing: **02.02.84**

(51) Int. Cl.⁵: **A 47 C 7/18**

(54) Covering for motor vehicle seats with dielectrically welded laminar facings.

(30) Priority: **15.02.83 IT 5294983 u**

(43) Date of publication of application:
**22.08.84 Bulletin 84/34**

(45) Publication of the grant of the patent:
**27.12.90 Bulletin 90/52**

(84) Designated Contracting States:
**DE FR GB SE**

(56) References cited:
**US-A-3 010 866**
**US-A-3 046 179**
**US-A-3 257 149**

(73) Proprietor: **FIAT AUTO S.p.A.**
**Corso Giovanni Agnelli 200**
**I-10135 Torino (IT)**

(72) Inventor: **Bosco, Giuseppe**
**Via Valfrè 36**
**I-10022 Carmagnola (Torino) (IT)**
Inventor: **Bonci, Attilio**
**Via V. Emanuele 4**
**I-10074 Lanzo Torinese (Torino) (IT)**
Inventor: **Rota, Giovanni**
**Via della Vittoria 6**
**I-10024 Moncalieri (Torino) (IT)**

(74) Representative: **Buzzi, Franco et al**
**c/o Jacobacci-Casetta & Perani S.p.A. Via Alfieri, 17**
**I-10121 Torino (IT)**

Courier Press, Leamington Spa, England.

## Description

The present invention relates to motor vehicle seat coverings in general.

More particularly, the invention relates to a covering including a soft support member of dielectrically weldable cellular, thermoplastic material, a sheet applied to one face of the support member, and at least one laminar facing of thermoplastic material bonded by dielectric welding to predetermined areas of the sheet.

A covering of the above mentioned type is generally known from US—A—3,010,866, in which the intermediate sheet is made of thermoplastic material and the facing is bonded to the material of such sheet, electrically heated and softened according to dielectric welding techniques.

The object of the present invention is to provide a covering for motor vehicle seats of the above mentioned type having improved features in terms of strength and duration.

The covering according to the invention is characterised in that the thermoplastic material of the support member is polyurethane, that the sheet is of a natural or synthetic fabric material flame-bonded or glued to the said one face of the support member, and in that the laminar facing is made of artificial leather or vinyl and dielectrically welded to the support member through the said sheet.

By virtue of this characteristic the laminar facing is not only bonded to the sheet, but it is firmly and steadily bonded to the support member, thus improving the strength and life of the covering.

A covering is thus formed which is economical and compact and which has a sculptured surface which displays the aesthetic aspect of the applied facings. The technology for the application of such facings allows considerable advantages to be obtained both from the point of view of manufacture and use compared with conventional coverings in which the coating of strips of fabric for aesthetic purposes may be carried out solely by sewing or special treatment of the fabric itself to make is suitable for heat-sealing.

Furthermore the use of polyurethane as the padding and welding element gives the cover good resilience which leads in use to more effective recovery from deformations.

Compared with conventional coverings, the covering according to the invention also has a considerably simpler structure and hence by definition is cheaper to manufacture.

One embodiment of the invention will now be described with reference to the appended schematic drawing which illustrates a portion of covering for motor vehicle seats according to the invention in perspective.

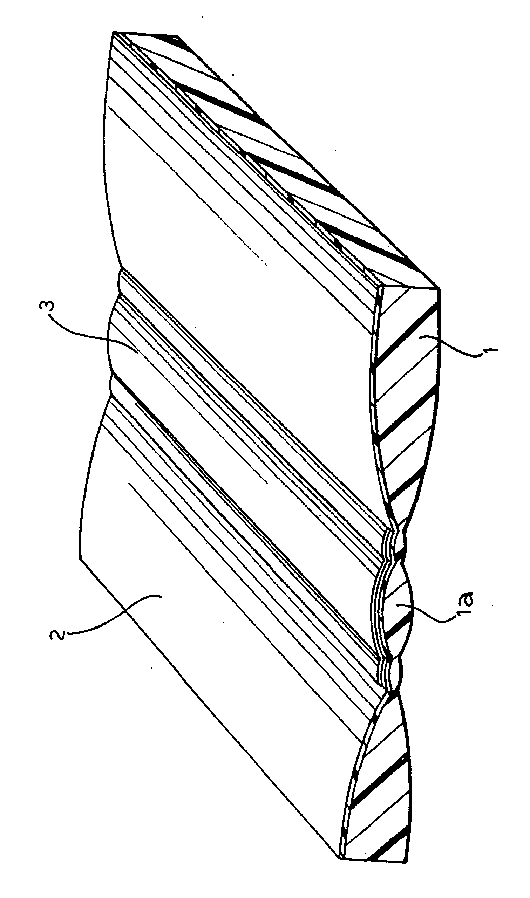

The covering illustrated in the drawing comprises a padding member 1 of dielectrically weldable cellular polyurethane, to one face of which is flame-bonded or glued a sheet of fabric 2. The fabric 2 may be of any natural or synthetic fibre and may possibly incorporate a strenthening reinforcement.

The padding member 1 has thinner portions 1a in correspondence with which there are applied laminar facing strips 3 of vinyl or artificial leather material for the purposes of aesthetic embellishment of the covering.

The thinner portions 1a may be pre-formed or alternatively formed at the moment of application of the laminar strips 3.

The strips 3 which preferably have an arcuate raised profile are firmly bonded to the fabric 2 by dielectric welding to the padding member 1.

The length of the strips 3 may be equal to that of the entire covering both longitudinally and transversely or may be less than this, in which case the facings would partially cover the covering.

In order to improve the strength of the covering, a mesh or reinforcing fabric or the like may be applied to the face of the padding element 1 opposite the fabric 2.

## Claim

Covering for motor vehicle seats, including a soft support member (1) of dielectrically weldable cellular thermoplastic material, a sheet (2) applied to one face of the support member (1), and at least one laminar facing (3) of thermoplastic material bonded by dielectric welding to predetermined areas of the sheet, characterised in that the thermoplastic material of the support member (1) is polyurethane, that the sheet (2) is of a natural or synthetic fabric material flame-bonded or glued to the said one face of the support member (1) and in that the laminar facing (3) is made of artificial leather or vinyl and is dielectrically welded to the support member (1) through the said sheet (2).

## Patentanspruch

Bezug für Kraftfahrzeug-Sitze mit einem weichen Trägerteil (1) aus dielektrisch schweißbarem thermoplastischem Schaumstoff, einem auf einer Seite des Trägerteils (1) angebrachten Blattmaterial (2) und wenigstens einem laminaren Überzug (3) aus thermoplastischem Material, der durch dielektrisches Schweißen mit vorbestimmten Bereichen des Blattmaterials verbunden ist, dadurch gekennzeichnet, daß das thermoplastische Material des Trägerteils (1) Polyurethan ist, daß das Blattmaterial (2) ein natürliches oder synthetisches Gewebematerial ist, das mit der genannten einen Seite des Trägerteils (1) flammverschweißt oder verklebt ist, und daß der laminare Überzug (3) aus Kunstleder oder Vinyl hergestellt und durch das Blattmaterial (2) hindurch mit dem Trägerteil (1) dielektrisch verschweißt ist.

## Revendication

Revêtement pour sièges de véhicule automobile, comprenant un élément de support (1) mou en matière thermoplastique cellulaire soudable diélectriquement, une feuille (2) appliquée sur un côté de l'élément de support (1), et au moins une couche externe stratifiée (3) en matière thermoplastique fixée par soudage diélectrique à des zones prédéterminées de la feuille, caractérisé en ce que la matière thermoplastique de l'élément de support (1) est le polyuréthanne, en ce que la feuille (2) est constituée par un tissu naturel ou synthétique soudé à la flamme ou collé audit côté de l'élément de support (1) et en ce que la couche externe stratifiée (3) est constituée par du cuir artificiel ou une matière vinylique et est soudée diélectriquement à l'élément de support (1) par l'intermédiaire de ladite feuille (2).